# NOUVEAU FASCICULE DE BREVET EUROPEEN

(11) **EP 0 502 759 B2**
(45) Date de publication et mention de la décision concernant l'opposition: **26.03.1997**
(45) Mention de la délivrance du brevet: 03.08.1994
(21) Numéro de dépôt: 92400478.1
(22) Date de dépôt: 25.02.1992
(51) Int. Cl.: B60S 1/38

(54) **Essuie-glace pour véhicule automobile à déflecteur aérodynamique**
Kraftfahrzeugscheibenwischer mit aerodynamischem Windabweiser
Automobile vehicle windshield wiper with aerodynamic air deflector

(30) Priorité: 01.03.1991 FR 9102491
(43) Date de publication de la demande: 09.09.1992
(73) Titulaire: PAUL JOURNEE S.A., F-92707 Colombes Cédex (FR)
(72) Inventeur: Journee, Maurice, F-60240 Chaumont-en-Vexin (FR); Jehannet, Jean-Pierre, F-27200 Vernon (FR)
(74) Mandataire: Lemaire, Marc

(56) Documents cités:
- EP-A- 0 337 042
- EP-A- 0 354 755
- EP-A- 0 419 328
- EP-A- 0 429 334
- EP-A- 0 465 332
- DE-A- 2 346 100
- DE-A- 2 839 587
- DE-A- 3 428 450
- DE-U- 8 518 515
- GB-A- 2 030 447

## Description

La présente invention concerne un essuie-glace pour véhicule automobile.

L'invention concerne plus particulièrement un essuie-glace du type comportant un bras porte-balai à mouvement oscillant sur lequel est articulé un balai d'essuie-glace constitué d'une lame d'essuyage portée par une structure de support et au moins un déflecteur qui est mis en oeuvre afin d'augmenter la pression d'appui du balai sur la vitre à haute vitesse du véhicule.

L'invention concerne un essuie-glace du type décrit et représenté dans la demande de brevet français FR-A-2.630.069 ou dans la demande européenne publiée EP-A-0 337 042 dans lequel le déflecteur est du type comportant des moyens de liaison démontables du balai d'essuie-glace et des moyens d'articulation du balai sur le bras porte-balai.

Grâce à cet agencement, il est possible de résoudre de manière efficace les problèmes de liaison du balai sur le bras, de réaliser l'essuie-glace à un coût réduit tout en obtenant une efficacité accrue du déflecteur lors du balayage.

On constate toutefois que, notamment dans le cas du balayage d'une vitre de grande dimension par exemple lorsque l'essuie-glace est un essuie-glace unique pour l'essuyage d'un pare-brise de véhicule automobile, l'effort de pression transmis par le déflecteur à la lame d'essuyage peut s'avérer insuffisant pour obtenir un résultat de bonne qualité au voisinage des extrémités du balai d'essuie-glace.

C'est plus particulièrement le cas lorsque la structure de support de la lame d'essuyage est une structure flexible qui nuit à la bonne transmission de l'effort de pression aérodynamique aux extrémités de la lame d'essuyage qui sont par exemple supportées par des étriers secondaires d'une structure de support connu du type à étrier principal et à étriers secondaires.

On peut songer à utiliser une disposition du type de celle décrite dans le document DE-A-2 842 132 ou GB-A-2 030 447 dans lequel le bras porte-balai est articulé directement sur le balai d'essuie-glace pourvu d'étriers d'épaisseurs variables. La surface externe des étriers forme une surface de déflection de l'air. Il en résulte qu'il n'est pas possible d'obtenir une surface de déflection sensiblement continue lorsque l'essuie-glace est en position de balayage. Il n'est donc pas possible d'obtenir d'essuyage à haute vitesse particulièrement efficace.

La solution divulguée par le document DE-A-3 428 450 permet d'obtenir une telle efficacité. Néanmoins, elle fait appel à un montage de déflecteur sur la lame du balai d'essuie-glace et également à un montage à articulation directe du balai sur son porte-balai.

La présente invention a pour but de résoudre ce problème en proposant un essuie-glace dont les moyens aérodynamiques pour augmenter la pression d'appui du balai sur la vitre procurent la plus grande efficacité possible tout en conservant les avantages résultant de la structure de l'essuie-glace décrite et représentée dans les documents FR-A-2.630.069 et EP-A-0 337 042 précédemment mentionnés.

A cet effet, la présente invention a pour objet un essuie-glace pour véhicule automobile comportant un bras porte-balai à mouvement oscillant sur lequel est articulé un balai d'essuie-glace constitué d'une lame souple d'essuyage portée par une structure de support flexible pour permettre que ladite lame épouse de manière intime le profil de la vitre à essuyer et au moins un premier déflecteur aérodynamique, appelé spoiler, du type comportant, d'une part, des moyens de liaison démontables du balai d'essuie-glace et, d'autre part, des moyens d'articulation dudit balai sur le bras porte-balai ladite structure de support flexible comportant au moins un étrier central auquel est associé, par lesdits moyens de liaison démontables, le premier déflecteur et un ou plusieurs étriers secondaires reliés fonctionnellement à l'étrier principal (Essuie-glace du type divulgué par FR-A-2 630 069 ou EP-A-0 337 042), caractérisé en ce que audit étrier secondaire ou à chacun desdits étriers secondaires est associé, par des moyens de liaison, un second déflecteur indépendant et en ce que les dimensions et les profils du déflecteur principal et du/ou des déflecteurs secondaires sont tels que les déflecteurs forment une surface de déflection sensiblement continue lorsque l'essuie-glace est en position de balayage.

Grâce aux enseignements de l'invention, il est donc possible d'obtenir un essuyage à haute vitesse particulièrement efficace tout en conservant les avantages du mode de liaison et d'articulation du balai sur le bras porte-balai résultant de la structure particulière du déflecteur principal central.

Selon différents modes de réalisation de l'invention :
- la structure de support de la lame d'essuyage comporte une pluralité d'étriers secondaires répartis de part et d'autre de la zone médiane de l'étrier principal et articulés par rapport à l'étrier principal ;
- chacun des déflecteurs indépendants est une pièce rapportée sur la structure de support de la lame d'essuyage ;
- chacun des déflecteurs indépendants est réalisé venu de matière avec une partie de la structure de support.

D'autres caractéristiques et avantages de l'invention apparaîtront à la lecture de la description détaillée qui va suivre pour la compréhension de laquelle on se reportera au dessin annexé, donné à titre d'exemple non limitatif, dans lequel :
- La figure 1 est une vue schématique de dessus d'un essuie-glace réalisé conformément aux enseignements de l'invention ;
- la figure 2 est une vue latérale de l'essuie-glace de la figure 1 ; et
- la figure 3 est une vue similaire à celle de la figure 2 qui illustre de manière simplifiée l'essuie-glace en position de balayage sur un pare-brise de véhicule automobile.

On reconnaît sur les figures un essuie-glace 10 qui est constitué pour l'essentiel d'un bras porte-balai 12 qui est prévu pour entraîner un balai d'essuie-glace 14 dans un mouvement de balayage oscillant .

Le balai d'essuie-glace 14 comporte une lame souple d'essuyage 16 qui est reliée par une structure de support au bras d'essuie-glace 12.

La structure de support de la lame d'essuyage 14 est par exemple constituée par un étrier principal ou étrier central 18 qui est relié au bras d'essuie-glace 12 et par deux étriers secondaires 20 et 22.

Les étriers secondaires 20 et 22 sont associés à l'étrier principal central 18 par exemple au moyen de liaisons par articulation de façon à constituer une structure de support de la lame d'essuyage 16 qui soit flexible pour permettre que la lame épouse de manière intime le profil de la vitre à essuyer et notamment d'un pare-brise de véhicule automobile.

Selon une technique connue, le nombre d'étriers secondaires dépend de la longueur hors tout de la lame d'essuyage ainsi que du profil de la vitre à essuyer. De même il peut exister plusieurs séries d'étriers secondaires en cascade dont les derniers, c'est-à-dire ceux situés à proximité de la vitre, reçoivent directement la lame d'essuyage 16.

La liaison et l'articulation du balai 14 sur l'extrémité du bras d'essuie-glace 12, c'est-à-dire la liaison de l'étrier central 18 sur cette extrémité, est réalisée conformément aux enseignements du document FR-A-2.630.069 au contenu duquel on pourra se reporter pour connaître les différents modes de réalisation de ce type de liaison qui se caractérisent par le fait qu'un déflecteur aérodynamique est prévu sur l'essuie-glace, ce déflecteur comportant d'une part des moyens de liaison démontables du balai d'essuie-glace et d'autre part des moyens d'articulation du bras porte-balai sur le bras porte-balai.

On reconnaît sur les figures le déflecteur principal central 24, également appelé spoiler, avec sa partie structurelle active 26 qui constitue les moyens de liaison démontables de l'étrier principal central 18 et les moyens d'articulation de cet étrier sur l'extrémité du bras porte-balai 12.

Outre le premier déflecteur 24, et conformément aux enseignements de l'invention, l'essuie-glace 10 comporte, dans le mode de réalisation illustré sur les figures, deux déflecteurs secondaires indépendants 28 et 30.

Chacun des deux déflecteurs indépendants 28 et 30 est associé respectivement à l'un des deux étriers secondaires 20 et 22 de la structure de support flexible de la lame d'essuyage 16.

Comme on peut le constater sur les figures, les dimensions et les profils du déflecteur principal 24 et des déflecteurs secondaires 28 et 30 sont tels que les trois déflecteurs forment une surface de déflection sensiblement continue lorsque l'essuie-glace est en position de balayage d'un pare-brise 32 de véhicule automobile.

La continuité de la surface de déflection aérodynamique résulte également du positionnement longitudinal relatif des trois déflecteurs de manière que, en position de balayage, il n'existe qu'un très faible jeu dans les zones des raccordements des différents déflecteurs.

Le mode de liaison de chacun des déflecteurs indépendants 28 et 30 avec la partie de la structure de support à laquelle il est associé peut revêtir de nombreuses formes.

Il est par exemple possible de fixer chaque déflecteur sur l'étrier secondaire par rivetage.

Selon une autre variante, chaque déflecteur 28 ou 30 peut être réalisé venu de matière avec une partie de l'étrier secondaire auquel il est associe.

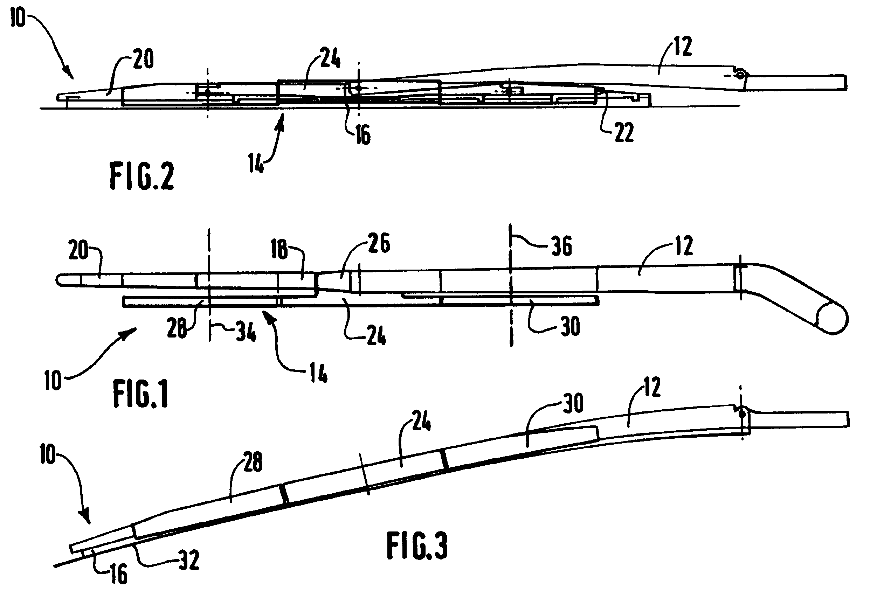

Pour des raisons de simplification de la représentation, les moyens de liaison ou d'association de chaque déflecteur indépendant 28 et 30 avec son étrier secondaire associé ont été illustrés sur la figure 2 de manière schématique par un trait mixte, respectivement 34 et 36.

Grâce aux enseignements de l'invention, il est donc possible d'obtenir un essuyage à haute vitesse particulièrement efficace tout en conservant les avantages du mode de liaison et d'articulation du balai 14 sur le bras porte-balai 12 résultant de la structure particulière du déflecteur principal central 24.

L'invention n'est pas limitée au mode de réalisation qui vient d'être décrit.

Par étrier secondaire au sens de l'invention, il faut également entendre tout type de structure de support constituée par une pluralité d'éléments associés entre eux de manière à conférer à cette structure de support une flexibilité suffisante pour lui permettre de s'adapter, avec la lame d'essuyage, à la courbure de la surface des vitres et pare-brise.

Il est par exemple possible de concevoir que les parties secondaires extrêmes de la structure de support sont reliées à la partie centrale par leurs extrémités en vis-à-vis au moyen d'un axe d'articulation ou, lorsque les différentes parties de la structure de support sont réalisées venues de matière, par une portion de section réduite conférant une possibilité de déformation élastique à l'ensemble.

L'invention n'est pas non plus limitée à l'agencement d'un déflecteur principal et de deux déflecteurs secondaires indépendants. Il est en effet possible de faire varier le nombre des déflecteurs en fonction de la longueur de la lame d'essuyage et de la courbure de la vitre à balayer. Les déflecteurs secondaires ne sont pas non plus nécessairement répartis de manière symétrique de part et d'autre du déflecteur principal 24. Mais dans toutes les variantes possibles de la conception et du nombre des déflecteurs secondaires, il est prévu que, conformément à l'invention, les différents déflecteurs forment une surface de déflection sensiblement continue lorsque l'essuie-glace est en position de balayage.

## Revendications

1. Essuie-glace (10) pour véhicule automobile comportant un bras porte-balai (12) à mouvement oscillant sur lequel est articulé un balai d'essuie-glace (14) constitué d'une lame souple d'essuyage (16) portée par une structure de support (18, 20, 22) flexible pour permettre que ladite lame épouse de manière intime le profil de la vitre (32) à essuyer et au moins un premier déflecteur (24) aérodynamique, appelé spoiler, du type comportant, d'une part, des moyens (26) de liaison démontables du balai d'essuie-glace (14) et, d'autre part, des moyens (26) d'articulation dudit balai (14) sur le bras porte-balai (12), ladite structure de support flexible comportant au moins un étrier central (18) auquel est associé, par lesdits moyens (26) de liaison démontables, le premier déflecteur (24) et un ou plusieurs étriers secondaires (20,22) reliés fonctionnellement à l'étrier principal (18), caractérisé en ce que audit étrier secondaire ou à chacun desdits étriers secondaires est associé, par des moyens de liaison, un second déflecteur indépendant (28, 30) et en ce que les dimensions et les profils du déflecteur principal (24) et du/ou des déflecteurs secondaires (28,30) sont tels que les déflecteurs (24,28,30) forment une surface de déflection sensiblement continue lorsque l'essuie-glace (10) est en position de balayage.

2. Essuie-glace selon la revendication 1, caractérisé en ce que la structure de support de la lame d'essuyage comporte une pluralité d'étriers secondaires répartis de part et d'autre de la zone médiane de l'étrier central (18) et articulés par rapport à ce dernier.

3. Essuie-glace selon l'une quelconque des revendications 1 à 2, caractérisé en ce que chacun des déflecteurs indépendants (28, 30) est une pièce rapportée sur la structure de support (20, 22).

4. Essuie-glace selon l'une quelconque des revendications 1 à 2, caractérisé en ce que chacun des déflecteurs indépendants (28, 30) est réalisé venu de matière avec une partie de la structure de support de la lame d'essuyage (16).

## Claims

1. A screen wiper (10) for a motor vehicle, comprising a screen wiper arm (12) arranged for oscillating movement, on which is articulated a screen wiper blade (14) comprising a flexible wiping strip (16) carried by a flexible support structure (18, 20, 22), for enabling the said strip to follow intimately the profile of the glass (32) being swept, and at least one first aerodynamic deflector (24), referred to as a spoiler, of the type comprising, firstly, coupling means (26) disconnectable from the screen wiper blade (14), and secondly, means (26) articulating the blade (14) on the screen wiper arm (12), the said flexible support structure including at least one central yoke member (18) with which is associated, through the said disconnectable coupling means (26), the first deflector (24) together with one or more secondary yoke members (20, 22), which are operatively coupled to the main yoke member (18), characterised in that, with the said secondary yoke member, or with each of the said secondary yoke members, there is associated, through coupling means, an independent second deflector (28, 30), and in that the dimensions and profiles of the main deflector (24) and/or of the secondary deflectors (28, 30) are such that the deflectors (24, 28, 30) define a substantially continuous deflection surface when the screen wiper (10) is in a wiping position.

2. A screen wiper according to Claim 1, characterised in that the support structure for the wiping strip comprises a plurality of secondary yoke members, arranged on either side of the median zone of the central yoke member (18) and articulated with respect to the latter.

3. A screen wiper according to Claim 1 or Claim 2, characterised in that each of the independent defectors (28, 30) is a member carried on the support structure (20, 22).

4. A screen wiper according to Claim 1 or Claim 2, characterised in that each of the independent deflectors (28, 30) is made integrally with part of the support structure for the wiping strip (16).

## Patentansprüche

1. Scheibenwischer für Kraftfahrzeuge, der einen in Pendelbewegung angetriebenen Scheibenwischerarm (12) umfaßt, an dem gelenkig ein Scheibenwischerblatt (14) angeordnet ist, das aus einem an einer flexiblen Halterungsstruktur (18, 20, 22) angebrachten biegsamen Wischgummi (16) besteht, so daß der besagte Wischgummi fest am Profil der zu wischenden Scheibe anliegen kann, sowie mindestens einen, als Spoiler bezeichneten, ersten Windabweiser (24) in einer Ausführung, die einerseits abnehmbare Verbindungsmittel (26) des Scheibenwischerblatts (14) und andererseits Mittel (26) für die gelenkige Anbringung des Wischerblatts (14) am Scheibenwischerarm (12) umfaßt, wobei die besagte flexible Halterungsstruktur mindestens einen Mittelbügel (18), mit dem der erste Windabweiser (24) über die besagten abnehmbaren Verbindungsmittel (26) verbunden ist, den ersten Windabweiser (24) und einen oder mehrere Sekundärbügel (20, 22) umfaßt, die funktionell mit dem Hauptbügel (18) verbunden sind , **dadurch gekennzeichnet,** daß mit dem besagten Sekundärbügel bzw. jedem der besagten Sekundärbügel über Verbindungsmittel ein unabhängiger zweiter Windabweiser (28, 30) verbunden ist und daß die Abmessungen und die Profile des Hauptwindabweisers (24) und/oder der Sekundärwindabweiser (28, 30) so gewählt sind, daß die Windabweiser (24, 28, 30) eine in etwa durchgehende Windabweisefläche bilden, wenn sich der Scheibenwischer in Wischstellung befindet.

2. Scheibenwischer nach Anspruch 1 , **dadurch gekennzeichnet,** daß die Halterungsstruktur des Wischgummis eine Mehrzahl von Sekundärbügeln umfaßt, die auf beiden Seiten des Mittelbereichs des Mittelbügels (18) verteilt und im Verhältnis zu diesem gelenkig angebracht sind.

3. Scheibenwischer nach einem der Ansprüche 1 bis 2, **dadurch gekennzeichnet,** daß es sich bei jedem der unabhängigen Windabweiser (28, 30) um ein Teil handelt, das an der Halterungsstruktur (20, 22) angesetzt ist.

4. Scheibenwischer nach einem der Ansprüche 1 bis 2, **dadurch gekennzeichnet,** daß jeder der unabhängigen Windabweiser (28, 30) einstückig mit einem Teil der Halterungsstruktur des Wischgummis (16) ausgeführt ist.
